# EUROPÄISCHE PATENTSCHRIFT

(11) **EP 0 978 093 B1**
(45) Veröffentlichungstag und Bekanntmachung des Hinweises auf die Patenterteilung: **17.10.2001**
(21) Anmeldenummer: 97934421.5
(22) Anmeldetag: 14.07.1997
(51) Int. Cl.: G06K 19/077

(54) **CHIPKARTE, VERFAHREN ZUR HERSTELLUNG EINER CHIPKARTE UND HALBLEITERCHIP ZUR VERWENDUNG IN EINER CHIPKARTE**
CHIP CARD, PROCESS FOR MANUFACTURING A CHIP CARD AND SEMICONDUCTOR CHIP FOR USE IN A CHIP CARD
CARTE A PUCE, PROCEDE DE FABRICATION D'UNE CARTE A PUCE, ET PUCE DE SEMI-CONDUCTEUR UTILISABLE DANS UNE CARTE A PUCE

(30) Priorität: 08.08.1996 DE 19632113
(43) Veröffentlichungstag der Anmeldung: 09.02.2000
(73) Patentinhaber: Infineon Technologies AG, 81669 München (DE)
(72) Erfinder: HUBER, Michael, D-93152 Nittendorf (DE); STAMPKA, Peter, D-92421 Schwandorf (DE); HOUDEAU, Detlef, D-84085 Langquaid (DE)
(74) Vertreter: Zedlitz, Peter, Dipl.-Inf.
(86) Internationale Anmeldenummer: DE9701479
(87) Internationale Veröffentlichungsnummer: WO9807113

(56) Entgegenhaltungen:
- EP-A- 0 207 852
- EP-A- 0 716 394
- WO-A-92/08209
- FR-A- 2 695 234

## Beschreibung

Die Erfindung bezieht sich auf eine Chipkarte gemäß dem Oberbegriff des Anspruchs 1 und einen Halbleiterchip insbesondere zur Verwendung in einer Chipkarte gemäß dem Oberbegriff des Anspruchs 5.

Derartige Chipkarten sowie Halbleiterchips zur Verwendung in einer Chipkarte sind beispielsweise aus Wolfgang Rankl, Wolfgang Effing, Handbuch der Chipkarten, Carl Hanser Verlag, München, Wien, 1995 bekannt geworden. Demnach wurden bei der Herstellung von Chipkarten zunächst sogenannte Chipmodule gefertigt, die Zwischenerzeugnisse darstellen, welche als fertigungstechnisch abgeschlossene Einheiten produziert und unabhängig zu Enderzeugnissen weiter verarbeitet werden können. Unter einem Chipmodul wird hierbei eine Anordnung verstanden, bei der auf oder in einem elektrisch isolierenden Träger eine oder mehrere integrierte Halbleiterschaltungen in Form von Chips oder integrierten Schaltkreisen angeordnet sind, die mit einem auf einer Seite oder auf beiden Seiten des Trägers vorgesehenen Leiterbahnsystem über Verbindungsanschlüsse verbunden sind, wobei der Träger in der Regel einen flexiblen Film darstellt, auf dem der eigentliche Chip montiert wird, und auf welchem sich die meist vergoldeten Kontaktflächen der Chipkarte befinden. Bei der Herstellung eines solchen Chipmoduls werden im wesentlichen zwei unterschiedliche Techniken verwendet, den Halbleiterchip auf den Trägerfilm zu packen: nämlich die sogenannte TAB-Technik (Tape Automated Bonding), sowie die Draht-Bond-Technik. Bei der TAB-Technik werden zunächst auf die Anschlußflächen (Pads) des Halbleiterchip metallische Höcker (Bumps) galvanisch aufgebracht, auf welche anschließend die Leiterbahnen des Trägerfilms aufgelötet werden. Diese Lötverbindung ist mechanisch so belastbar, dass der Chip selbst nicht weiter befestigt werden muß, sondern nur an den Leiterbahnen hängt. Der Vorteil des TAB-Verfahrens liegt in der hohen mechanischen Belastbarkeit der Chipanschlüsse und in der geringen Bauhöhe des Moduls. Dieser Vorteil muss allerdings durch einen höheren Preis gegenüber dem Draht-Bond-Modul erkauft werden. Bei diesem wird als Trägermaterial wiederum eine Kunststofffolie vorgesehen, auf deren Vorderseite die goldbeschichteten Kontaktflächen galvanisch aufgebracht sind. Zur Aufnahme des Chips und der Drahtverbindungen sind Löcher aus dem Trägerfilm ausgestanzt. Der Chip wird nunmehr in die vorgesehene Ausstanzung von der Rückseite auf der Leiterbahn befestigt (Die-Bonding). Anschließend werden die Chipanschlüsse mit dünnen Drähten (einige Mikrometer) mit der Rückseite der Kontakte verbunden. Abschließend werden der Chip und die Bonddrähte durch eine Vergussmasse gegen Umwelteinflüsse geschützt. Der Vorteil dieses Verfahrens liegt darin, dass es sich weitgehend an das in der Halbleiterindustrie übliche Verfahren zur Verpackung von Chips in Standardgehäusen anlehnt, und dadurch preisgünstiger ist. Der Nachteil liegt darin, dass sowohl die Bauhöhe wie auch die Länge und Breite des Moduls deutlich größer sind als beim TAB-Modul, weil nicht nur der Chip, sondern auch die Bonddrähte durch die Abdeckmasse geschützt werden müssen. Dadurch werden aber auch die Probleme beim Einbau der Module in die Chipkarte vergrößert.

Die EP 0 207 852 A1 zeigt ein Modul, das ähnlich wie ein TAB-Modul aufgebaut ist. Der Halbleiterchip weist dort ebenfalls. Löthöcker auf, die mit Leiterbahnen auf einem Trägerfilm verbunden werden. Allerdings werden die Leiterbahnen dort mittels eines Stempels in der Art eines Tiefziehverfahrens durch Ausnehmungen im Trägerfilm gedrückt, um dann mit den Löthökkern verbunden werden zu können. Dieses Verfahren ist jedoch sehr aufwendig. Außerdem müssen die Löthöcker sehr genau positioniert sein, um eine saubere Verbindung mit den Leiterbahnen zu gewährleisten.

Aus dem fertig montierten Film werden anschließend die einzelnen Chipmodule ausgestanzt und in die Chipkarte eingebracht. Bei dieser Methode findet keine direkte Befestigung des Halbleiterchips in der Karte statt, was den Vorteil besitzt, dass die Biegekräfte weitgehend vom Halbleiterchip abgehalten werden, die bei mechanischer Belastung der Karte entstehen. Allen bisher bekannt gewordenen Modulaufbautechniken bzw. Gehäusetechnologien aus dem Chipkartensektor gemeinsam ist die Zielsetzung, den integrierten Schaltkreis vor me chanischer Belastung aufgrund von Biegung oder Torsion zu schützen, die aufgrund der spröden Materialeigenschaften des integrierten Schaltkreises zu dessen Zerstörung fuhren kann. Die Standarddicke der in Chipkarten verwendeten integrierten Schaltkreisen bzw. Halbleiterchips beträgt derzeit etwa 200 µm. Der E-Modul von Silizium liegt hierbei in der Größenordnung von 190 • 10³ N/mm², das Werkstoffverhalten des Siliziumchips ist somit äußerst spröde. Der gehäuseseitige Schutz des empfindlichen Halbleiterchips ist wegen des hierbei erforderlichen Montage- und Materialaufwandes kostenintensiv und wegen der erst nach der Herstellung des integrierten Schaltkreises durchzuführenden Montage- und Fertigungsschritte zeitaufwendig.

Der vorliegenden Erfindung liegt die Aufgabe zugrunde, eine gegenüber den bisher bekannt gewordenen Chipmodulen einfachere Anordnung mit einem integrierten Halbleiterschaltkreis zur Verfügung zu stellen, welche für den Einsatz in einer Chipkarte brauchbar ist und insbesondere den bei Chipkarten vorgegebenen Biegebelastungen genügt.

Diese Aufgabe wird durch eine Chipkarte gemäß Anspruch 1 sowie einen Halbleiterchip insbesondere zur Verwendung in einer Chipkarte gemäß Anspruch 5 gelöst.

Erfindungsgemäß ist vorgesehen, dass die Kontaktflächen in der Form einer strukturierten Beschichtung auf einer der elektronischen Schaltung zugewandten Hauptoberfläche des Halbleiterchips gefertigt sind, und der zusammen mit den Kontaktflächen gefertigte Halbleiterchip in einer Aufnahmeöffnung des Kartenkörpers der Chipkarte solcherart eingesetzt und befestigt ist, dass die Kontaktflächen im wesentlichen bündig mit der Außenfläche des Kartenkorpers verlaufen.

Der Erfindung liegt hierbei zunächst die Erkenntnis zugrunde, sich von dem bislang stets als Zwischenerzeugnis gefertigten Chipmodul völlig abzuwenden und eine modullose Fertigung einer Chipkarte vorzuschlagen, bei der der Halbleiterchip unmittelbar mit den erforderlichen Kontaktflächen versehen ist, und der zusammen mit den Kontaktflächen gefertigte Halbleiterchip unmittelbar, d.h. ohne irgend welche Träger- oder Stützfolien oder sonstiger den Halbleiterchip vor mechanischer Belastung schützender Maßnahmen direkt in den Kartenkörper zu implantieren. Die hinsichtlich der äußeren Abmessungen vorzugsweise nach den bisherigen ISO-Standard gefertigten Kontaktflächen werden somit vollständig von dem Halbleitersubstrat des Chips bzw. des integrierten Schaltkreises abgestützt; das Substrat besitzt hierzu entsprechend der von den nach ISO-Standard ausgehenden Kontaktflächen benötigte Grundfläche, die im Verhältnis zu den bisher verwendeten Halbleiterchips deutlich größer ist. Dieser Nachteil wird jedoch durch die folgenden Vorteile, welche sich aufgrund der erfindungsgemäßen Lösung bieten, mehr als ausgeglichen. Zum einen eröffnet sich die Möglichkeit, die Kontaktflächen anstelle der bisherigen kosten- und zeitaufwendigen Montage unmittelbar nach der Fertigstellung der elektronischen Schaltungen im Front-End-Betrieb, noch im Waferverbund der noch nicht voneinander getrennten Halbleiterchips herzustellen, vorzugsweise mit den zur Abscheidung und Strukturierung von Metallschichten in der Halbleitertechnologie üblich verwendeten Beschichtungsverfahren. Nach dem Sägen bzw. mechanischen Trennen der einzelnen Halbleiterchips auf das entsprechende Raster wird der mit den Kontaktflächen versehene Halbleiterchip mit dem Kartenkörper mittels geeigneter Verbundungstechniken verbunden, vorzugsweise vermittels einem Klebe- oder Haftmaterial dauerhaft innerhalb der Aufnahmeöffnung des Kartenkörpers befestigt. Hierfür eignen sich dem Prinzip nach sämtliche derzeit bekannten Implantationstechniken, also beispielsweise eine Hot-Melt-Einbautechnik, ein Einbau vermittels Cyanocrelat-Klebstoff, ein Einbau vermittels einer drucksensiblen Klebefolie, oder eine sonstige physikalische Verbindungstechnik.

Vorzugsweise wird zur Ausbildung der Aufnahmeöffnung in den fertigen Kartenkörper ein Loch gefräst, in welches anschließend der mit den Kontaktflächen ausgestattete Halbleiterchip eingeklebt wird. Die Erfindung ist jedoch genauso bei im Laminierverfahren hergestellte Chipkarten anwendbar, bei dem die Chipkarte durch Laminieren verschiedener Folien, den Deckfolien und den Inlettfolien, hergestellt wird, wobei vor dem Laminieren passende Löcher in die Folien gestanzt werden und daran anschließend der Halbleiterchip eingesetzt wird, und der Halbleiterchip fest mit dem Kartenkörper verschweißt wird. Weiterhin eignet sich die erfindungsgemäße Lösung auch für Kartenkörper, die im Spritzgussverfahren hergestellt werden. Hierbei wird der gesamte Kartenkörper einschließlich der Aussparung für den Halbleiterchip als Spritzgussteil hergestellt und der Halbleiterchip darin eingeklebt.

Die lateralen Abmessungen der den Halbleiterchip annähernd passgenau aufnehmenden Aufnahmeöffnung des Kartenkörpers sind von der geforderten Funktionalität des integrierten Schaltkreises beziehungsweise des Halbleiterchips und von den gewünschten bzw. nach ISO-Standard erforderlichen Abmessungen der Kontaktflächen bestimmt. Die besonders bevorzugte Ausführungsform der Erfindung basiert auf dem Halbleitermaterial Silizium, insbesondere kristallines Silizium. Darüber hinaus kann aus Kostengründen jedoch ebenfalls ein anderer wirtschaftlicher Halbleiterwerkstoff zum Einsatz gelangen, der idealerweise mit einem Waferdurchmesser von größer als sechs Zoll hergestellt wird.

Bei einer besonders bevorzugten Ausführung der Erfindung ist vorgesehen, dass die Stärke des vorzugsweise aus Silizium bestehenden Halbleitersubstrats deutlich weniger als 200 µm, vorzugsweise etwa 150 µm oder kleiner, insbesondere vorzugsweise etwa 100 µm oder kleiner beträgt. Idealerweise beträgt die Gesamtstärke des Siliziumsubstrates etwa 50 µm bis etwa 100 µm. Demgegenüber beträgt die Standarddicke der bisher in Chipkarten implantierten Halbleiterchips derzeit etwa 200 µm.

Der E-Modul von Silizium liegt hierbei in einer Größenordnung von 190 • 10³ N/mm², das Werkstoffverhalten des Siliziumchips ist somit äußerst spröde. Mit abnehmender Chipdicke steigt jedoch die Flexibilität des Siliziumchips bezüglich Biegung. Dieser Effekt wird durch Rückseitendünnungsverfahren nach dem Schleifen der Siliziumwafer wie Damageätzen noch verstärkt. Die durch das Rückseitenschleifen hervorgerufenen atomaren Fehlstellen des Halbleiterchips (Versetzungen und dergleichen), die bei Biegebelastungen die Chipbruchwahrscheinlichkeit unter Umständen drastisch verstärken, werden durch nachfolgendes Ätzen der Chiprückseite um etwa 4 bis 7 µm nahezu ausgeschaltet.

Bei einer weiterhin bevorzugten Ausführung der Erfindung kann vorgesehen sein, dass auf der die elektronische Schaltung tragenden Hauptoberfläche des Halbleitersubstrats eine dünne Isolationsschicht aufgebracht ist, auf welcher die Kontaktflächen in der Form einer strukturierten Beschichtung abgeschieden sind. Hierbei beträgt die Gesamtstärke der elektrisch leitenden Beschichtung für die Kontaktflächen vorzugsweise etwa 30 µm bis etwa 50 µm.

Der bevorzugte Aufbau eines mit den Kontaktflächen bestückten Halbleiterchips zur Verwendung in einer Chipkarte zeichnet sich somit dadurch aus, dass unmittelbar auf dem mit einer strukturierten Oberfläche mit den Bestandteilen für die elektronische Schaltung und der Padmetallisierung (Kontaktanschlüsse) eine dünne Schicht aus einem Werkstoff mit Dielektrikumeigenschaften abgeschieden ist, bei dem die Padflächen ausgespart sind. Wahlweise kann auch eine widerstandsfähige Zwischenschicht aufgebracht werden. Oberhalb dem Dielektrikum wird eine elektrisch leitende Schicht aufgebracht, dessen Kontaktflächen mit den Padflächen verbunden sind und die zueinander elektrisch isoliert sind, im einfachsten Fall über Luftlücken. Die Kontaktflächen genügen hierbei dem entsprechenden ISO-Standard (Vorschrift ISO 7810-2). Wahlweise kann die elektrisch leitende Schicht aus einem Edelmetall wie Gold, AuCo, NiPau, Hartnickel/Au, einlagig oder mehrlagig, oder anderen geeigneten Werkstoffen bestehen, wobei die äußerste Lage materialseitig im Sinne guter tribologischer Eigenschaften und verbesserter Korrisionsbeständigkeit ausgewählt sein kann, beispielsweise ein dünner, etwa 2 µm starker elektrisch leitender Carbonlack mit guten mechanischen Härteeigenschaften.

Weitere Merkmale, Vorteile und Zweckmäßigkeiten der Erfindung ergeben sich aus der Beschreibung eines Ausführungsbeispiels anhand der Zeichnung: Es zeigt:
- Figur 1: eine schematische Schnittansicht einer Chipkarte mit einem Kartenkörper und einem in eine Aufnahmeöffnung des Kartenkörpers befestigten, mit Kontaktflächen versehenen Halbleiterchip gemäß einem Ausführungsbeispiel der Erfindung; und
- Figur 2: die Abhängigkeit der Biegespannung vom Biegeradius eines Siliziumgrundmaterials bei einigen ausgewählten Stärken des Siliziummaterials.

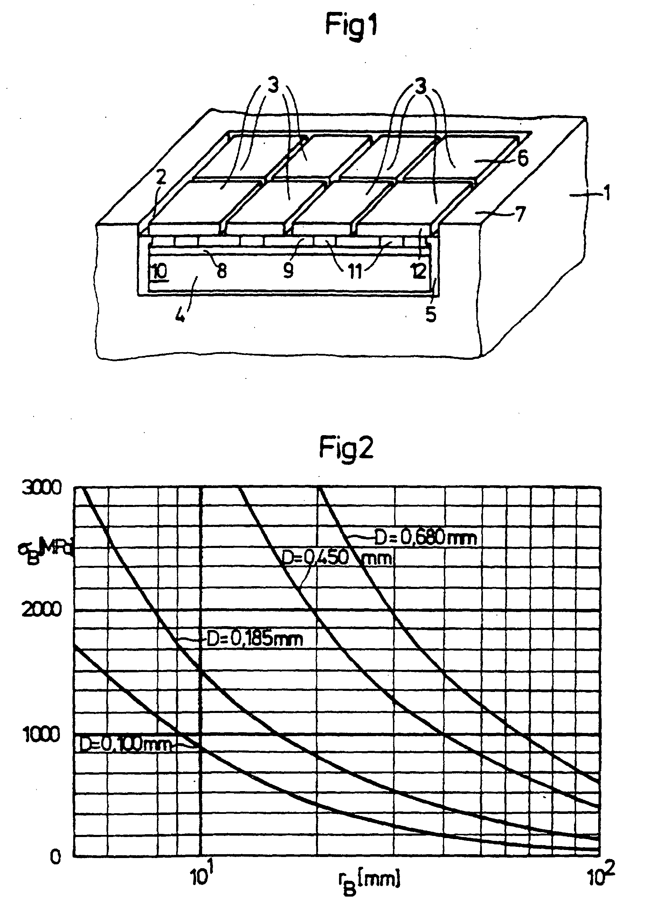

Die nicht maßstabsgetreu gezeichnete schematische Darstellung nach Figur 1 zeigt einen Ausschnitt einer Chipkarte mit einem Kartenkörper 1 mit gängigen äußeren Abmessungen von 85 mm • 54 mm • 1 mm und einer durch Fräsen hergestellten Aufnahmeöffnung 2, in welcher ein mit Kontaktflächen 3 ausgestatteter Halbleiterchip 4 vermittels eines Klebematerials 5 dauerhaft dergestalt befestigt ist, daß die äußeren Oberflächen 6 der Kontaktflächen 3 im wesentlichen bündig mit der Außenfläche 7 des Kartenkörpers 1 verlaufen.

Der Halbleiterchip 4 umfasst ein Siliziumsubstrat der Stärke 40 µm, auf dem die zur Ausbildung der elektronischen Schaltung benötigten Bestandteile bzw. Strukturen vermittels gängiger Halbleitertechnologieschritte gefertigt sind, wobei diese Bestandteile eine Bauhöhe von etwa 10 µm besitzen. In üblicher Weise sind die Bestandteile bzw. Strukturen zur Ausbildung der elektronischen Schaltung mit einer schützenden Si₃N₄-Schicht der Stärke von etwa 3 µm überdeckt. In Figur 1 sind die genannten Strukturen und die Si₃N₄-Schicht der Einfachheit halber als eine Schicht nur schematisch angedeutet und mit dem Bezugszeichen 8 versehen. Nach Ausbilden einer Padmetallisierung zur Fertigung der Pads bzw. Kontaktanschlüsse 11 wird eine dünne Isolationsschicht 9 aus einem Dielektrikummaterial der Stärke 20 µm abgeschieden, die an den Stellen der Kontaktanschlüsse 11 ausgespart ist. Auf der sonach ausgebildeten Oberfläche ist eine dünne metallische Beschichtung 12 abgeschieden, welche mit den aus der Halbleitertechnologie bekannten Lithographieverfahren zur Fertigung der gegeneinander elektrisch isolierten Kontaktflächen 3 strukturiert wird. Somit ist jede Kontaktfläche 3 mit dem zugehörenden Kontaktanschluss 11 der elektronischen Schaltung elektrisch verbunden.

Figur 2 zeigt die Abhängigkeit der Biegespannung σ_{B} von dem Biegeradius r_{B} bei einigen ausgewählten Dicken eines Siliziumgrundmaterials. Man erkennt, dass bei Substratstärken des Halbleiterchips von weniger als 100 um der Chip bereits so flexibel gegenüber Biegung und Torsion ist, daß er den mechanischen ISO-Anforderungen ohne zusätzlichen Gehäuseschutz widerstehen kann. Die Untersuchungen der Erfinder haben gezeigt, dass auch bei derart geringen Chipdicken integrierte Schaltungen mit ausreichender Ausbeute hergestellt werden können.

Zusammenfassend gelingt es mit der erfindungsgemäßen Lösung, eine einfach herzustellende, modullose integrierte Schaltung für den Einsatz in einer gängigen Chipkarte herzustellen, wobei keine aufwendigen Prozessschritte im sogenannten Back-End-Fertigungsstadium erforderlich sind, gleichzeitig die in der Regel mit hohen Kosten und Aufwendungen verbundenen Entwicklungen besonderer Gehäuse- bzw. Packungsformen für den gewünschten Einsatz eingespart werden können, und dabei ein hoher wirtschaftlicher Nutzen bei einer erheblichen Reduzierung des erforderlichen Logistikaufwandes auf Seiten des Chipkartenherstellers gegeben ist.

## Patentansprüche

1. Chipkarte mit einem Kartenkörper (1) und mehreren aus elektrisch leitendem Material gefertigten Kontaktflächen, die mit Kontaktanschlüssen (11) elektrisch verbunden sind, welche einer auf dem Halbleitersubstrat (10) eines Halbleiterchips (4) ausgebildeten elektronischen Schaltung zugeordnet sind,
**dadurch gekennzeichnet, dass**
die Kontaktflächen (3) in der Form einer strukturierten Beschichtung auf einer der elektronischen Schaltung zugewandten Hauptoberfläche des Halbleiterchips (4) gefertigt sind, so daß die Kontaktflächen (3) vollständig vom Halbleitersubstrat (10) des Halbleiterchips (4) abgestützt werden, und der zusammen mit den Kontaktflächen (3) gefertigte Halbleiterchip (4) in einer Aufnahmeöffnung (2) des Kartenkörpers (1) der Chipkarte solcherart eingesetzt und befestigt ist, dass die Kontaktflächen (3) im wesentlichen bündig mit der Außenfläche (7) des Kartenkörpers (1) verlaufen.

2. Chipkarte nach Anspruch 1, **dadurch gekennzeichnet, dass** der auf seiner Hauptoberfläche die Kontaktflächen (3) tragende Halbleiterchip (4) vermittels einem Klebe- oder Haftmaterial (5) dauerhaft innerhalb der Aufnahmeöffnung (2) des Kartenkörpers (1) befestigt ist.

3. Chipkarte nach Anspruch 1 oder 2, **dadurch gekennzeichnet, dass** die Stärke des vorzugsweise aus Silizium bestehenden Halbleitersubstrats (10) zur Erhöhung der Flexibilität deutlich weniger als 200 µm, vorzugsweise etwa 150 µm oder kleiner, insbesondere vorzugsweise etwa 100 µm oder kleiner beträgt.

4. Chipkarte nach einem der Ansprüche 1 bis 3, **dadurch gekennzeichnet, dass** auf der die elektronische Schaltung tragenden Hauptoberfläche des Halbleitersubstrats (10) eine dünne Isolationsschicht (9) aufgebracht ist, auf welcher die Kontaktflächen (3) in der Form einer strukturierten Beschichtung abgeschieden sind.

5. Halbleiterchip mit Kontaktanschlüssen (11), welche einer auf dem Halbleitersubstrat (10) des Halbleiterchips (4) ausgebildeten elektrischen Schaltung zugeordnet sind,
**dadurch gekennzeichnet, dass**
mit den Kontaktanschlüssen (11) elektrisch verbundene Kontaktflächen (3) in der Form einer strukturierten Beschichtung auf einer der Schaltung zugewandten Hauptoberfläche des Halbleiterchips (4) gefertigt sind, so daß die Kontaktflachen (3) vollständig vom Halbleitersubstrat (10) des Halbleiterchips (4) abgestützt werden.

6. Halbleiterchip nach Anspruch 5, **dadurch gekennzeichnet, dass** auf der die elektronische Schaltung tragenden Hauptoberfläche des Halbleitersubstrats (10) eine dünne Isolationsschicht (9) aufgebracht ist, auf welcher die Kontaktflächen (3) in der Form einer strukturierten Beschichtung abgeschieden sind.

7. Halbleiterchip nach einem der Ansprüche 5 bis 6, **dadurch gekennzeichnet, dass** die Stärke des vorzugsweise aus Silizium bestehenden Halbleitersubstrats (10) zur Erhöhung der Flexibilität deutlich weniger als 200 µm, vorzugsweise etwa 150 µm oder kleiner, insbesondere vorzugsweise etwa 100 µm. oder kleiner beträgt.

8. Halbleiterchip nach Anspruch 7, **dadurch gekennzeichnet, dass** die Stärke des vorzugsweise aus Silizium bestehenden Halbleitersubstrates (10) etwa 50 µm bis etwa 100 µm beträgt.

9. Halbleiterchip nach einem der Ansprüche 5 bis 8, **dadurch gekennzeichnet, dass** die Gesamtstärke der elektrisch leitenden Beschichtung (12) für die Kontaktflächen (3) etwa 30 µm bis etwa 50 µm beträgt.

10. Halbleiterchip nach einem der Ansprüche 5 bis 9, **dadurch gekennzeichnet, dass** die elektrisch leitende Beschichtung (12) für die Kontaktflächen (3) aus mehreren elektrisch leitenden Lagen besteht.

## Claims

1. Smart card having a card body (1) and a plurality of contact areas which are fabricated from electrically conductive material and are electrically connected to contact terminals (11), which are assigned to an electronic circuit formed on the semiconductor substrate (10) of a semiconductor chip (4),
**characterized in that**
the contact areas (3) are fabricated in the form of a structured coating on a main surface of the semiconductor chip (4), the said main surface facing the electronic circuit, with the result that the contact areas (3) are completely supported by the semiconductor substrate (10) of the semiconductor chip (4), and the semiconductor chip (4) fabricated together with the contact areas (3) is inserted and fixed in a receptacle opening (2) in the card body (1) of the smart card in such a way that the contact areas (3) extend essentially flush with the outer face (7) of the card body (1).

2. Smart card according to Claim 1, **characterized in that** the semiconductor chip (4) carrying the contact areas (3) on its main surface is fixed permanently within the receptacle opening (2) in the card body (1) by means of an adhesive or bonding material (5).

3. Smart card according to Claim 1 or 2, **characterized in that** the thickness of the semiconductor substrate (10), which is preferably composed of silicon, for the purpose of increasing the flexibility, is distinctly less than 200 µm, preferably about 150 µm or less, in particular preferably about 100 µm or less.

4. Smart card according to one of Claims 1 to 3, **characterized in that** a thin insulation layer (9) is applied on the main surface of the semiconductor substrate (10) carrying the electronic circuit, on which insulation layer the contact areas (3) are deposited in the form of a structured coating.

5. Semiconductor chip having contact terminals (11), which are assigned to an electrical circuit formed on the semiconductor substrate (10) of the semiconductor chip (4),
**characterized in that**
contact areas (3) electrically connected to the contact terminals (11) are fabricated in the form of a structured coating on a main surface of the semiconductor chip (4), the said main surface facing the circuit, with the result that the contact areas (3) are completely supported by the semiconductor substrate (10) of the semiconductor chip (4).

6. Semiconductor chip according to Claim 5, **characterized in that** a thin insulation layer (9) is applied on the main surface of the semiconductor substrate (10) carrying the electronic circuit, on which insulation layer the contact areas (3) are deposited in the form of a structured coating.

7. Semiconductor chip according to one of Claims 5 to 6, **characterized in that** the thickness of the semiconductor substrate (10), which is preferably composed of silicon, for the purpose of increasing the flexibility, is distinctly less than 200 µm, preferably about 150 µm or less, in particular preferably about 100 µm or less.

8. Semiconductor chip according to Claim 7, **characterized in that** the thickness of the semiconductor substrate (10), which is preferably composed of silicon, is about 50 µm to about 100 µm.

9. Semiconductor chip according to one of Claims 5 to 8, **characterized in that** the total thickness of the electrically conductive coating (12) for the contact areas (3) is about 30 µm to about 50 µm.

10. Semiconductor chip according to one of Claims 5 to 9, **characterized in that** the electrically conductive coating (12) for the contact areas (3) comprises a plurality of electrically conductive layers.

## Revendications

1. Carte à puce comprenant un corps (1) de carte et plusieurs surfaces de contact en un matériau conducteur de l'électricité, qui sont reliées électriquement à des homes (11) de contact, qui sont associées à un circuit électronique constitué d'une puce (4) à semi-conducteur sur le substrat (10) semi-conducteur, **caractérisée en que** les surfaces (3) de contact sont fabriquées sous la forme d'un revêtement structuré sur une surface principale de la puce (4) à semi-conducteur qui est tournée vers le circuit électronique, de façon que les surfaces (3) de contact soient soutenues entièrement par le substrat (10) semi-conducteur de la puce (4) à semi-conducteur, et la puce (4) à semi-conducteur fabriquée en même temps que les surfaces (3) de contact est insérée et fixée dans une ouverture (2) de réception du corps (1) de la carte à puce, de façon que les surfaces (3) de contact soient sensiblement à affleurement avec la surface (7) extérieure du corps (1) de la carte.

2. Carte à puce suivant la revendication 1, **caractérisée en ce que** la puce (4) à semi-conducteur portant sur sa surface principale les surfaces (3) de contact est fixée au moyen d'une matière (5) collante ou adhérente de manière durable dans l'ouverture (2) de réception du corps (1) de la carte.

3. Carte à puce suivant la revendication 1 ou 2, **caractérisée en ce que** l'épaisseur du substrat (10) semi-conducteur, de préférence en silicium, est, pour augmenter la souplesse, nettement inférieure à 200 µm, de préférence d'environ 150 µm ou plus petite, notamment de préférence d'environ 100 µm ou plus petite.

4. Carte à puce suivant l'une des revendications 1 à 3, **caractérisée en ce qu'**il est déposé sur la surface principale portant le circuit électronique du substrat (10) semi-conducteur une mince couche (9) d'isolement sur laquelle les surfaces (3) de contact sont déposées sous la forme d'un revêtement structuré.

5. Puce à semi-conducteur ayant des bornes (11) de contact qui sont associées à un circuit électrique constitué sur le substrat (10) semi-conducteur de la puce (4) à semi-conducteur, **caractérisée en ce que** des surfaces (3) de contact reliées électriquement aux homes (11) de contact sont fabriquées sous la forme d'un revêtement structuré sur l'une des surfaces principales de la puce à semi-conducteur qui est tournée vers le circuit, de façon que les surfaces (3) de contact soient soutenues entièrement par le substrat (10) semi-conducteur de la puce (4) à semi-conducteur.

6. Puce à semi-conducteur suivant la revendication 5, **caractérisée en ce qu'**il est déposé sur la surface principale portant le circuit électronique du substrat (10) semi-conducteur une mince couche (9) d'isolement sur laquelle les surfaces (3) de contact sont déposées sous la forme d'un revêtement structuré.

7. Puce à semi-conducteur suivant l'une des revendications 5 à 6, **caractérisée en ce que** l'épaisseur du substrat (10) semi-conducteur, de préférence en silicium, est, pour augmenter la souplesse, nettement inférieure à 200 µm, de préférence d'environ 150 µm ou plus petite, notamment de préférence d'environ 100 µm ou plus petite.

8. Puce à semi-conducteur suivant la revendication 7, **caractérisée en ce que** l'épaisseur du substrat (10) à semi-conducteur, qui est de préférence en silicium, est comprise entre environ 50 µm et environ 100 µm.

9. Puce à semi-conducteur suivant l'une des revendications 5 à 8, **caractérisée en ce que** l'épaisseur totale du revêtement (12) conducteur de l'électricité pour les surfaces (3) de contact est comprise entre environ 30 µm et environ 50 µm.

10. Puce à semi-conducteur suivant l'une des revendications 5 à 9, **caractérisée en ce que** le revêtement (12) conducteur de l'électricité pour les surfaces (3) de contact est constitué de plusieurs couches conductrices de l'électricité.
